# EUROPEAN PATENT APPLICATION

(11) **EP 3 035 210 A1**
(43) Date of publication of application: **22.06.2016**
(21) Application number: 14789077.6
(22) Date of filing: 21.05.2014
(51) Int. Cl.: G06F 17/30

(54) **METHOD AND DEVICE FOR OBTAINING WEB PAGE CATEGORY STANDARDS, AND METHOD AND DEVICE FOR CATEGORIZING WEB PAGE CATEGORIES**

(30) Priority: 04.09.2013 CN 201310399022
(71) Applicant: ZTE Corporation, Shenzhen, Guangdong 518057 (CN)
(72) Inventor: YU, Bo, Shenzhen Guangdong 518057 (CN)
(74) Representative: Brevalex
(86) International application number: PCT/CN2014/078020
(87) International publication number: WO 2014/173349

(57) **Abstract**

Disclosed are a method and device for obtaining web page category standards, and a method and device for categorizing web pages. Tag contents are extracted from sample pages; standard characteristic terms are extracted from the tag contents; on the basis of the standard characteristic terms extracted from the tag contents, a list of standard categories and standard weights of standard characteristic terms, i.e. the standard for web page categories, are obtained; web pages to be categorized are categorized on the basis of the standard.

## Description

### TECHNICAL FIELD

The disclosure relates to the field of communications, and particularly to a web page categorization standard acquisition method and device and a web page categorization method and device.

### BACKGROUND

Various web pages are categorized so as to analyse web page access records of a user, thus acquiring an Internet access preference of the user so that an Internet service based on the preference can be further provided to the user to optimize the degree of satisfaction of user experience. At present, there are already many web page categorization methods, and in all these methods, a keyword is extracted from a text of a web page, an algorithm model is created for the keyword subsequently so as to obtain a categorizer (a web page categorization standard), and a web page of an unknown category is categorized by the categorizer. All these existing web page categorization methods have the following technical problems.

In existing web page categorization, a keyword is extracted from a text of a web page, and the extracted keyword is less representative because of a great deal of noise information existing in the text of the web page, thus greatly reducing the accuracy in categorizing the web page.

### SUMMARY

Embodiments of the disclosure provide a web page categorization standard acquisition method and device and a web page categorization method and device so as to solve the existing technical problem.

An embodiment of the disclosure provides a web page categorization standard acquisition method, including:
a sample web page of each of standard categories is acquired;
content of a tag is extracted from each of the acquired sample web pages;
a standard characteristic word is determined from the extracted content of the tag;
the number of occurrences of each standard characteristic word in each of the standard categories is determined according to the number of occurrences of the each standard characteristic word in content of each tag; and
a proportion value of each standard characteristic word in each of the standard categories is determined according to the number of occurrences of the each standard characteristic word in each of the standard categories, so as to acquire a standard list of portion values of standard characteristic words in the standard categories.

In an embodiment of the disclosure, the tag may comprise at least one of a title tag, keywords tag, description tag and an important text tag.

In an embodiment of the disclosure, the step that the standard characteristic word is determined from the extracted content of the tag may include:
word segmentation is performed on the extracted content of the tag to acquire the standard characteristic word.

In an embodiment of the disclosure, the step that the proportion value of each standard characteristic word in each of the standard categories is determined according to the number of occurrences of the each standard characteristic word in each of the standard categories so as to acquire the standard list of portion values of standard characteristic words in the standard categories may include:
a vector space is composed using the number of occurrences of each standard characteristic word in each of the standard categories; and
the proportion value of each standard characteristic word in each of the standard categories is acquired using a statistical algorithm.

In an embodiment of the disclosure, the method may further include: after the proportion value of each standard characteristic word in each of the standard categories is determined according to the number of occurrences of the each standard characteristic word in each of the standard categories,

It is determined whether there is a standard characteristic word having close proportion values in all standard categories, and when there is, the standard characteristic word is deleted from the standard list of portion values.

An embodiment of the disclosure further provides a web page categorization method, including:
content of tags of a web page to be categorized is extracted;
characteristic words are extracted from the content of the tags according to standard characteristic words in the standard list of portion values acquired above;
the number of occurrences of each characteristic word in the web page to be categorized is determined according to numbers of occurrences of the each characteristic word in the content of the tags; and
a standard category to which the web page to be categorized belongs is determined according to numbers of occurrences of the extracted characteristic words in the web page to be categorized and the standard list of portion values.

In an embodiment of the disclosure, the step that the characteristic words are extracted from the content of the tags according to the standard characteristic words in the standard list of portion values may include: words which are the same as any of the standard characteristic words are extracted from the content of the tags as the characteristic words; or words which are the same as and similar to any of the standard characteristic words are extracted from the content of the tags as the characteristic words, wherein the words similar to any of the standard characteristic words are represented by corresponding standard characteristic words when such words exist in the content of the tags.

In an embodiment of the disclosure, the step that the number of occurrences of each characteristic word in the web page to be categorized is determined according to the numbers of occurrences of the each characteristic word in the content of the tags may include:
numbers of occurrences of a characteristic word in the content of the tags are summed, so as to acquire the number of occurrences of the characteristic word in the web page to be categorized; or
respective weighted values are set for the content of the tags, numbers of occurrences of a characteristic word in the content of the tags are multiplied by respective weighted values corresponding to the content of the tags and resulting products are summed, so as to acquire the number of occurrences of the characteristic word in the web page to be categorized.

In an embodiment of the disclosure, the step that the standard category to which the web page to be categorized belongs is determined according to the numbers of occurrences of the extracted characteristic words in the web page to be categorized and the standard list of portion values may include:
when the web page to be categorized has only one characteristic word, the number of occurrences of the characteristic word in the web page to be categorized is multiplied by proportion values of the characteristic word in the standard categories, so as to acquire scores in the standard categories, and a standard category corresponding to the largest score is taken as the standard category to which the web page to be categorized belongs; or
when the web page to be categorized has at least two characteristic words, the number of occurrences of each characteristic word in the web page to be categorized is multiplied by proportion values of the each characteristic word in the standard categories so as to acquire scores of the characteristic words in the standard categories, and a standard category corresponding to the largest score among all acquired scores is taken as the standard category to which the web page to be categorized belongs; or a standard category corresponding to the largest score among scores of each characteristic word is taken as the standard category to which the web page to be categorized belongs.

An embodiment of the disclosure further provides a web page categorization standard acquisition device, including:
a web page acquiring module, configured to acquire a sample web page of each of standard categories;
a content acquiring module, configured to extract content of a tag from each of the acquired sample web pages;
a standard characteristic word acquiring module, configured to determine a standard characteristic word from the extracted content of the tag;
a first calculating module, configured to determine the number of occurrences of each standard characteristic word in each of the standard categories according to the number of occurrences of the each standard characteristic word in content of each tag; and
a first processing module, configured to determine a proportion value of each standard characteristic word in each of the standard categories according to the number of occurrences of the each standard characteristic word in each of the standard categories, so as to acquire a standard list of portion values of standard characteristic words in the standard categories.

In an embodiment of the disclosure, the device may further include a correcting module configured to, after the first processing module acquires the proportion value of each standard characteristic word in each of the standard categories according to the number of occurrences of the each standard characteristic word in each of the standard categories, determine whether there is a standard characteristic word having close proportion values in all standard categories, and when there is, delete the standard characteristic word from the standard list of portion values.

An embodiment of the disclosure further provides a web page categorization device, including:
a tag acquiring module, configured to extract content of tags of a web page to be categorized;
a characteristic word acquiring module, configured to extract characteristic words from the content of the tags according to standard characteristic words in the standard list of portion values acquired above;
a second calculating module configured to determine, according to numbers of occurrences of each characteristic word in the content of the tags, the number of occurrences of the each characteristic word in the web page to be categorized; and
a second processing module configured to determine, according to numbers of occurrences of the extracted characteristic words in the web page to be categorized and the standard list of portion values, a standard category to which the web page to be categorized belongs.

An embodiment of the disclosure further provides a computer storage medium having stored therein instructions that, when executed, cause at least one processor to perform the web page categorization standard acquisition method described above.

An embodiment of the disclosure further provides a computer storage medium having stored therein instructions that, when executed, cause at least one processor to perform the web page categorization method described above.

The embodiments of the disclosure have the following beneficial effect.

In a web page categorization standard acquisition method and device and a web page categorization method and device provided by the embodiments of the disclosure, content of tags of sample web pages is extracted, standard characteristic words are extracted from the content of the tags, then a standard list of portion values of standard characteristic words in the standard categories, i.e. a web page categorization standard is acquired based on the standard characteristic words extracted from the content of the tags and a web page to be categorized is categorized based on the standard. Since all standard characteristic words in the disclosure are extracted from the content of the tags of the web pages, the standard characteristic words are more representative than keywords extracted from texts of the web pages, thus web page categories acquired based on the standard is more accurate and the effect of categorizing web pages accessed by a user can be greatly improved.

### BRIEF DESCRIPTION OF THE DRAWINGS

In the accompanying drawings (not necessarily drawn to scale), similar numerals of the accompanying drawings may describe similar components in different views, and similar numerals having different letter suffixes in the accompanying drawings may represent different instances of similar components. The accompanying drawings generally illustrate, by means of examples, but not by means of limitation, various embodiments discussed herein.
Fig. 1 is a first structural diagram of a web page categorization standard acquisition device in a first embodiment of the disclosure;
Fig. 2 is a second structural diagram of a web page categorization standard acquisition device in a first embodiment of the disclosure;
Fig. 3 is a flowchart of a web page categorization standard acquisition method in a first embodiment of the disclosure;
Fig. 4 is a structural diagram of a web page categorization device in a second embodiment of the disclosure;
Fig. 5 is a flowchart of a web page categorization method in a second embodiment of the disclosure; and
Fig. 6 is a flowchart of a web page categorization standard acquisition and web page categorization process in a third embodiment of the disclosure.

### DETAILED DESCRIPTION

The disclosure will be further expounded hereinafter through specific embodiments with reference to the accompanying drawings.

### Embodiment 1

The present embodiment expounds acquisition of a web page categorizer, i.e. a process of acquiring a web page categorization standard.

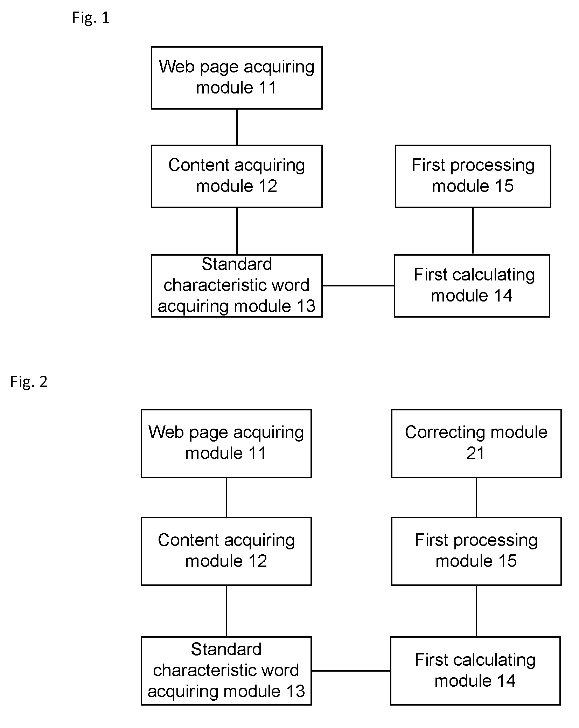

Referring to Fig. 1, the figure shows a structural diagram of a web page categorization standard acquisition device, including:
a web page acquiring module 11, configured to acquire a sample web page of each of standard categories;
here, the standard categories in the present embodiment refer to web page categories in a library of initial categories, and the initial categories here refer to several categories that web pages are initially expected to be divided, and sample web pages are selected pertinently according to the initial categories; the sample web pages of corresponding categories in the library of initial categories may be specifically acquired by searching the required categories from a navigation website, and may be also specifically acquired by searching the required categories through a search engine, so as to acquire the corresponding web page of a website;
a content acquiring module 12, configured to extract content of a tag from each of the acquired sample web pages;
here, the tags of the web pages in the present embodiment may include at least one of a title tag, keywords tag, description tag and an important text tag while the important text tag here at least includes at least one of h1, h2, h3, h4, h5 and h6, and selection of tags may be implemented and set according to specific web page categories and/or specific web pages;
a standard characteristic word acquiring module 13, configured to determine a standard characteristic word from the extracted content of the tag;
the standard characteristic word here is a standard keyword, and it is standard because a keyword of a web page to be categorized may be selected according to these keywords when the web page is categorized;
it is necessary to perform word segmentation on the extracted content of the tags when the standard characteristic word is extracted from the content of the tag, and the word segmentation refers to a process that words of a text content are analysed so as to distinguish Chinese characters and non-Chinese characters, and the Chinese characters are analysed and processed to acquire a vocabulary entry list including words that may be used as characteristic words;
the vocabulary entry list may be also filtered so as to further improve the accuracy; for example, a stop word in the list is removed so as to ensure the availability of vocabulary entries in the vocabulary entry list;
a first calculating module 14, configured to determine the number of occurrences of each standard characteristic word in each of the standard categories according to the number of occurrences of the each standard characteristic word in content of each tag; and
a first processing module 15, configured to determine a proportion value of each standard characteristic word in each of the standard categories according to the number of occurrences of the each standard characteristic word in each of the standard categories, so as to acquire a standard list of portion values of standard characteristic words in the standard categories.

The standard list of portion values is namely the web page categorizer, the operation that the standard list of portion values is acquired specifically includes that:
a vector space is composed using the number of occurrences of each standard characteristic word in each of the standard categories; and
the proportion value of each standard characteristic word in each of the standard categories is acquired by using a statistical algorithm. The statistical algorithm in the present embodiment may apply a chi-squared algorithm, a Bayesian algorithm and so on.

A web page may be categorized subsequently based on the standard list of portion values. Since the keywords are extracted based on the content of the tags of the sample web pages and noise information in the content of the tags is much less than that in texts of the web pages, the acquired keywords are more representative, and the accuracy in categorizing the web page can be greatly improved.

Referring to Fig. 2, the web page categorization standard acquisition device in the present embodiment further includes a correcting module 21, configured to determine, after the first processing module acquires the proportion value of each standard characteristic word in each of the standard categories according to the number of occurrences of the each standard characteristic word in each of the standard categories, determine whether there is a standard characteristic word having close proportion values in all standard categories, and if there is, which indicates that the standard characteristic word is less representative, delete the standard characteristic word from the standard list of portion values, thus further improving the accuracy for subsequent web page categorization.

In practical application, the web page acquiring module 11, the content acquiring module 12, the standard characteristic word acquiring module 13, the first calculating module 14, the first processing module 15 and the correcting module 21 may be implemented by a Central Processing Unit (CPU), a Digital Signal Processor (DSP) or a Field-Programmable Gate Array (FPGA) in the web page categorization standard acquisition device.

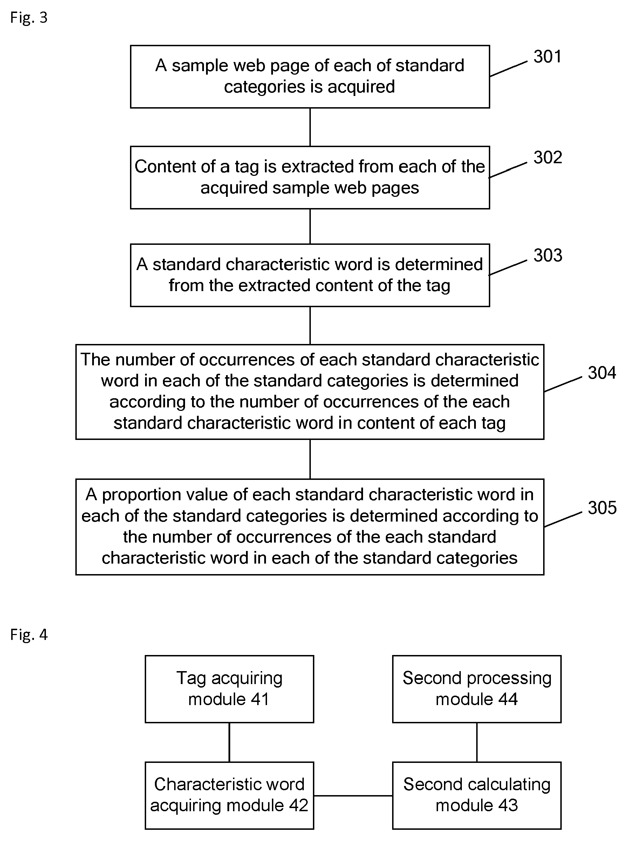

The embodiment of the disclosure will be further described below with reference to a schematic diagram of the whole process of acquiring the web page categorization standard. Referring to Fig. 3, the process of acquiring the web page categorization standard includes the following steps.

Step 301, a sample web page of each of standard categories is acquired.

Here, the standard categories in the present embodiment refer to web page categories in a library of initial categories, and the initial categories here refer to several categories that web pages are initially expected to be divided, and sample web pages are selected pertinently according to the initial categories; the sample web pages of corresponding categories in the library of initial categories may be specifically acquired by searching the required categories from a navigation website, and may be also specifically acquired by searching the required categories through a search engine, so as to acquire the corresponding web page of a website.

Step 302, content of a tag is extracted from each of the acquired sample web pages.

Here, the tags of the web pages in the present embodiment may include at least one of a title tag, keywords tag, description tag and an important text tag while the important text tag here at least includes at least one of h1, h2, h3, h4, h5 and h6, and selection of tags may be implemented and set according to specific web page categories and/or specific web pages;

Step 303, a standard characteristic word is determined from the extracted content of the tag.

Here, the standard characteristic word is a standard keyword, and it is standard because a keyword of a web page to be categorized may be selected according to these keywords when the web page is categorized.

It is necessary to perform word segmentation on the extracted contents of the tags when the standard characteristic word is extracted from the contents of the tags, and the word segmentation refers to a process that words of a text content are analysed so as to distinguish Chinese characters and non-Chinese characters, and the Chinese characters are analysed and processed to acquire a vocabulary entry list including words that may be used as characteristic words.

The vocabulary entry list may be also filtered so as to further improve the accuracy. For example, a stop word in the list is removed so as to ensure the availability of vocabulary entries in the vocabulary entry list.

Step 304, the number of occurrences of each standard characteristic word in each of the standard categories is determined according to the number of occurrences of the each standard characteristic word in content of each tag.

Step 305, a proportion value of each standard characteristic word in each of the standard categories is determined according to the number of occurrences of the each standard characteristic word in each of the standard categories, so as to acquire a standard list of portion values of standard characteristic words in the standard categories.

The standard list of portion values is namely the web page categorizer, the operation that a specific process of acquiring the standard list of portion values may include that:
a vector space is composed using the number of occurrences of each standard characteristic word in each of the standard categories; and
the the proportion value of each standard characteristic word in each of the standard categories is acquired by using a statistical algorithm. The statistical algorithm in the present embodiment may apply a chi-squared algorithm, a Bayesian algorithm and so on.

After Step 305, the present embodiment may further include the following step:
It is determined whether there is a standard characteristic word having close proportion values in all standard categories. The closeness in the present embodiment is mainly used for representing whether the characteristic word is representative, a specific determination standard may be set according to a specific application scenario, and the closeness mainly means that the characteristic word is distributed uniformly in the categories. If it is determined that there is such a standard characteristic word, it is indicated that the standard characteristic word is less representative, and the standard characteristic word may be deleted from the standard list of portion values, thus further improving the accuracy in categorizing the web page subsequently.

### Embodiment 2

The first embodiment has elaborated the process of acquiring the web page categorizer, and on this basis, the present embodiment emphatically elaborates a process of categorizing a web page of an unknown category, i.e. a web page to be categorized.

Referring to Fig. 4, a web page categorization device in the present embodiment includes:
a tag acquiring module 41, configured to extract content of tags of a web page to be categorized;
here, an extracting rule of the tag acquiring module may be the same as a tag extracting rule of the web page categorizer described above;
a characteristic word acquiring module 42, configured to extract characteristic words from the content of the tags according to standard characteristic words in the standard list of portion values acquired in the first embodiment;
here, the characteristic word acquiring module 42 may extract words which are the same as any of the standard characteristic words in the standard list of portion values from the content of the tags as the characteristic words; or extract words which are the same as and similar to any of the standard characteristic words in the standard list of portion values from the content of the tags as the characteristic words, specifically, the words similar to any of the standard characteristic words are represented by corresponding standard characteristic words when such words exist in the content of the tags, it is then necessary to calculate the similarity of the corresponding words in the content of the tags to the standard characteristic words so as to determine whether the words are close to the standard characteristic words;
a second calculating module 43 configured to determine, according to numbers of occurrences of each characteristic word in the content of the tags, the number of occurrences of the each characteristic word in the web page to be categorized;
here, the second calculating module 43 may be specifically configured to:
   sum numbers of occurrences of a characteristic word in the content of the tags, so as to acquire the number of occurrences of the characteristic word in the web page to be categorized, in which case the tags are not differentiated according to their respective significance; or
   set respective weighted values for the content of the tags; for example, weighted values may be set for the tags according to the significance of the tags, e.g. a weighted value of 1.2 or 1.4 may be set for the title tag while a weighted value of 0.8 or 0.6 may be set for h3 and so on; at the moment, the categorization may be performed according to the difference in the significance of content in the web page, which can further improve the accuracy in categorizing the web page;
   subsequently, multiply numbers of occurrences of a characteristic word in the content of the tags by respective weighted values corresponding to the content of the tags and summing resulting products, so as to acquire the number of occurrences of the characteristic word in the web page to be categorized;
   a second processing module 44 configured to determine, according to numbers of occurrences of the extracted characteristic words in the web page to be categorized and the standard list of portion values, a standard category to which the web page to be categorized belongs.

Here, the second processing module 44 is specifically configured to:
when the web page to be categorized has only one characteristic word, multiply the number of occurrences of the characteristic word in the web page to be categorized by proportion values of the characteristic word in the standard categories, so as to acquire scores in the standard categories, and take a standard category corresponding to the largest score as the standard category to which the web page to be categorized belongs; or
when the web page to be categorized has at least two characteristic words, multiply the number of occurrences of each characteristic word in the web page to be categorized by proportion values of the each characteristic word in the standard categories so as to acquire scores of the characteristic words in the standard categories, and take a standard category corresponding to the largest score among all acquired scores as the standard category to which the web page to be categorized belongs, wherein the web page to be categorized eventually belongs to only one category at the moment; or take a standard category corresponding to the largest score among scores of each characteristic word as the standard category to which the web page to be categorized belongs, wherein the web page to be categorized may belong to a plurality of categories at the moment, which of the plurality of categories the web page to be categorized belongs to may be set according to a specific condition.

In practical application, the tag acquiring module 41, the characteristic word acquiring module 42, the second calculating module 43 and the second processing module 44 may be implemented by a CPU, a DSP and an FPGA in the web page categorization device.

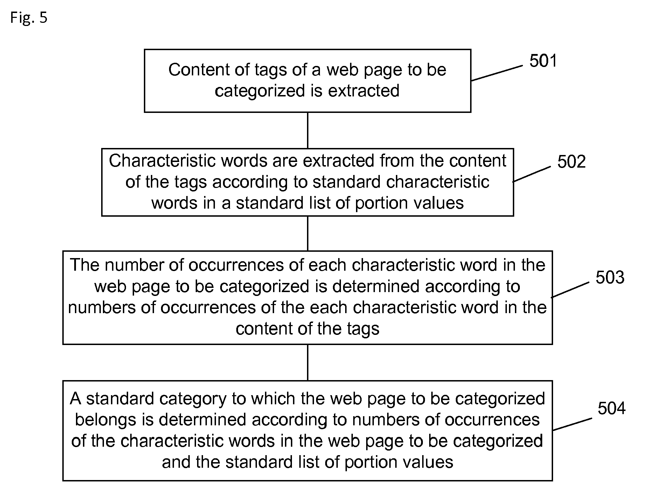

Referring to Fig. 5, the figure shows a flowchart of web page categorization, including:
Step 501, content of tags of a web page to be categorized is extracted.

Here, information of a web page on the Internet may be specifically acquired in real time by linking the web page through Hypertext Transfer Protocol (HTTP). Therefore, web page contents of a web page of an unknown category may be acquired, and texts of these contents are parsed and extracted subsequently to extract corresponding tags which may include at least one of a title tag, keywords tag, description tag and an important text tag. Here, the important text at least includes at least one of h1, h2, h3, h4, h5 and h6.

Step 502, characteristic words are extracted from the content of the tags according to standard characteristic words in a standard list of portion values.

Specifically, words which are the same as any of the standard characteristic words in the standard list of portion values may be extracted from the content of the tags as the characteristic words; or words which are the same as and similar to any of the standard characteristic words in the standard list of portion values are extracted from the content of the tags as the characteristic words, the words similar to any of the standard characteristic words are represented by corresponding standard characteristic words when such words exist in the content of the tags, it is then necessary to calculate the similarity of the corresponding words in the content of the tags to the standard characteristic words so as to determine whether the words are close to the standard characteristic words.

Step 503, the number of occurrences of each characteristic word in the web page to be categorized is determined according to numbers of occurrences of the each characteristic word in the content of the tags.

Here, a statistical method includes, but is not limited to that:
numbers of occurrences of a characteristic word in the content of the tags are summed so as to acquire the number of occurrences of the characteristic word in the web page to be categorized, in this case the tags are not differentiated according to their respective significance; or
respective weighted values are set for the content of the tags; for example, weighted values may be set for the tags according to the significance of the tags, e.g. a weighted value of 1.2 or 1.4 may be set for the title tag while a weighted value of 0.8 or 0.6 may be set for h3 and so on; at the moment, the categorization may be performed according to the difference in the significance of content in the web page, which can further improve the accuracy in categorizing the web page; and
then numbers of occurrences of a characteristic word in the content of the tags are multiplied by respective weighted values corresponding to the content of the tags and summing resulting products, so as to acquire the number of occurrences of the characteristic word in the web page to be categorized.

Step 504, a standard category to which the web page to be categorized belongs is determined according to numbers of occurrences of the characteristic words in the web page to be categorized and the standard list of portion values.

Specifically, when the web page to be categorized has only one characteristic word, the number of occurrences of the characteristic word in the web page to be categorized is multiplied by proportion values of the characteristic word in the standard categories, so as to acquire scores in the standard categories, and a standard category corresponding to the largest score is taken as the standard category to which the web page to be categorized belongs; or
when the web page to be categorized has at least two characteristic words, the number of occurrences of each characteristic word in the web page to be categorized is multiplied by proportion values of the each characteristic word in the standard categories so as to acquire scores of the characteristic words in the standard categories, and a standard category corresponding to the largest score among all acquired scores is taken as the standard category to which the web page to be categorized belongs, wherein the web page to be categorized eventually belongs to only one category at the moment; or a standard category corresponding to the largest score among scores of each characteristic word is taken as the standard category to which the web page to be categorized belongs, wherein the web page to be categorized may belong to a plurality of categories at the moment, to which of the plurality of categories the web page to be categorized belongs may be set according to a specific condition.

### Embodiment 3

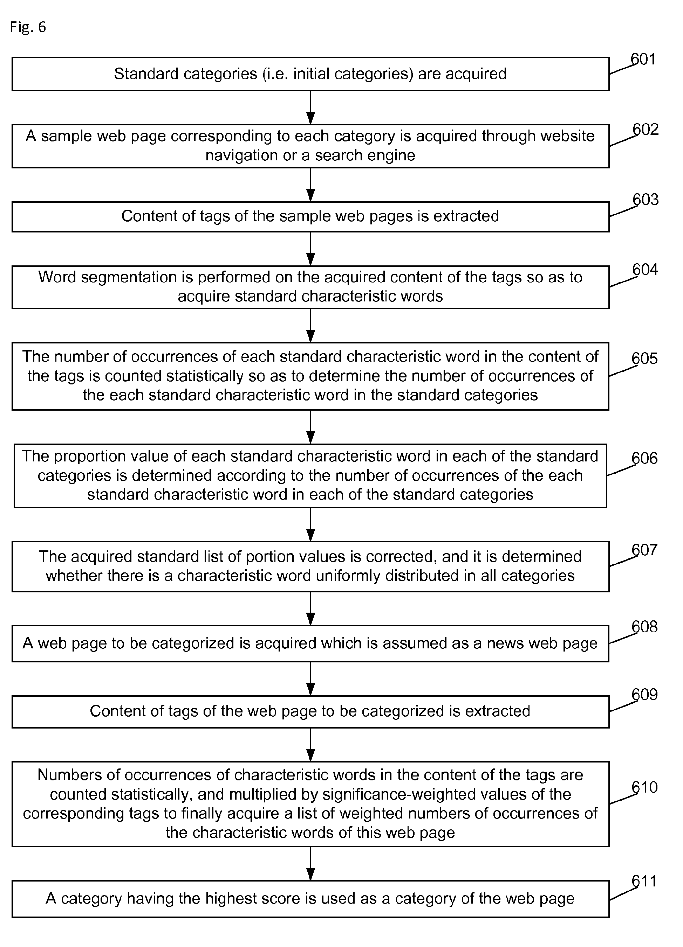

To make the disclosure better understood, the disclosure will be further explained exemplarily based on an example in which solutions provided by the disclosure are applied to a specific scenario; referring to Fig. 6, following steps are included.

Step 601, standard categories (i.e. initial categories) are acquired, including: catering and foods, animation websites, transportation and travel, educational culture, finance and economy, military and national defense, and automobile websites.

Step 602: A sample web page corresponding to each category is acquired through website navigation or a search engine. Of course, a plurality of sample websites may be acquired. For example, ten web pages corresponding to each category are acquired, and one sample web page is illustrated schematically herein.

Step 603, content of tags of the sample web page is extracted. It is assumed that the extracted content of the tags may include: a title, keywords, description and h1, h2 and h3.

Step 604, word segmentation is performed on the acquired content of the tags so as to acquire standard characteristic words. The standard characteristic words acquired here include: menu, qq, animation, scenic spot, exam, futures, military intelligence, and automobile.

Step 605, the number of occurrences of each standard characteristic word in the content of the tags is counted statistically so as to determine the number of occurrences of the each standard characteristic word in the standard categories.

Step 606, the proportion value of each standard characteristic word in each of the standard categories is determined according to the number of occurrences of the each standard characteristic word in each of the standard categories. The present 2 embodiment specifically applies an X algorithm as an example, and an acquired standard list of portion values is for example as shown in Table 1:

**Table 1**

| | Menu | qq | Animation | Scenic spot | Exam | Futures | Military intelligence | Automobile |
|---|---|---|---|---|---|---|---|---|
| Catering and foods | **0.553344** | 0.019719 | 0.019713 | 0.016917 | 0.019724 | 0.017848 | 0.016554 | 0.016869 |
| Animation websites | 0.015891 | 0.017733 | **0.472861** | 0.017605 | 0.020544 | 0.018562 | 0.017222 | 0.017592 |
| Transportation and travel | 0.017108 | 0.019761 | 0.022354 | **0.511314** | 0.022157 | 0.019968 | 0.018536 | 0.019013 |
| Educational culture | 0.019378 | 0.018416 | 0.02561 | 0.021483 | **0.404793** | 0.022593 | 0.020988 | 0.021659 |
| Finance and economy | 0.020121 | 0.022583 | 0.026672 | 0.022308 | 0.026143 | **0.484453** | 0.02179 | 0.022523 |
| Military and national defense | 0.014587 | 0.019761 | 0.018726 | 0.016155 | 0.018815 | 0.017057 | **0.527333** | 0.016067 |
| Automobile websites | 0.019515 | 0.022280 | 0.025806 | 0.021634 | 0.025343 | 0.022751 | 0.021136 | **0.507589** |

Step 607, the acquired standard list of portion values is corrected, and it is determined whether there is a characteristic word uniformly distributed in all categories, i.e. a standard characteristic word that is not representative, and if there is, the
characteristic word is deleted.

For example, a standard characteristic word such as qq, which is distributed uniformly in the categories, is deleted, thereby acquiring the following standard list of portion values, i.e. a categorizer, as shown in Table. 2:

**Table 2**

| | Menu | Animation | Scenic spot | Exam | Futures | Military intelligence | Automobile |
|---|---|---|---|---|---|---|---|
| Catering and foods | **0.553344** | 0.019713 | 0.016917 | 0.019724 | 0.017848 | 0.016554 | 0.016869 |
| Animation websites | 0.015891 | **0.472861** | 0.017605 | 0.020544 | 0.018562 | 0.017222 | 0.017592 |
| Transportatio n and travel | 0.017108 | 0.022354 | **0.511314** | 0.022157 | 0.019968 | 0.018536 | 0.019013 |
| Educational culture | 0.019378 | 0.02561 | 0.021483 | **0.404793** | 0.022593 | 0.020988 | 0.021659 |
| Finance and economy | 0.020121 | 0.026672 | 0.022308 | 0.026143 | **0.484453** | 0.02179 | 0.022523 |
| Military and national defense | 0.014587 | 0.018726 | 0.016155 | 0.018815 | 0.017057 | **0.527333** | 0.016067 |
| Automobile websites | 0.019515 | 0.025806 | 0.021634 | 0.025343 | 0.022751 | 0.021136 | **0.507589** |

Step 608, a web page to be categorized is acquired which is assumed as a news web page. A specific acquisition method will be omitted herein.

Step 609, content of tags of the web page to be categorized is extracted. It is assumed that the content of the tags of the web page is only as follows.

For example, a news web page includes the following content:
<title>Automobile homepage_Sina Automobiles_Sina </title>
<meta name="Keywords" content="automobiles, automobile websites, automobile quoted prices, Sina Automobiles, automobile news, automobile prices, automobile pictures, second-hand cars, automobile videos, automobile prices, car model information, purchase guide, automobile insurances, sales " />
<meta name="Description" content="Sina Automobiles provides quoted prices of automobiles, pictures of automobiles, videos of automobiles, prices of automobiles, and car model information for you, with thousands of pieces of automobile news and prices updated on a daily basis, it is the largest and most influential professional automobile website with the richest content in China, which collects all domestic and foreign automobile brands. Sina automobiles reports release information of new cars at first hand while providing convenient and quick search of automobiles as well as practical purchase guides of automobiles, and is the best choice for cyber citizens to purchase, use and maintain their cars." />
<h1 id="hltitle" class="ep-h1">Sina Automobiles</h1>

Tags h2 and h3 are not contained in the web page, thus word segmentation is only performed on the content of the tags above, and characteristic words of the categorizer are retained to acquire "automobile", "model", "purchase", "use" and so on and the number of occurrences of each characteristic word.

Here, the content of different tags may be differentiated. Generally, the significance of the content of title is greater than that of keywords while that significance of the content of keywords is greater than that of description. Similarly, the tag h1, which is unique in the whole web page, is of extremely great significance. Therefore, weights of the tags are 1, 0.8, 0.6 and 1 respectively.

Step 610, numbers of occurrences of characteristic words in the content of the tags are counted statistically, and multiplied by significance-weighted values of the corresponding tags to finally acquire a list of weighted numbers of occurrences of the characteristic words of this web page.

Here, when these characteristic words are weighted, it is necessary to multiply characteristics words in tags title and h1 by a weight of 1, while multiplying a characteristic word in the tag keywords by 0.8 and a characteristic word in the tag description by 0.6. Corresponding weighting calculation also needs to be performed if there is h2 or h3.

E.g. in the example:
Automobile: appearing twice in title, and a weighted number of occurrences is 2; appearing for 10 times in keywords, and a weighted number of occurrences is 8; appearing for 11 times in description, and a weighted number of occurrences is 6.6, appearing once in h1, and a weighted number of occurrences is 1, and an overall weighted number of occurrences is 17.6.

A weighted number of occurrences of each characteristic word may be acquired by calculation, and the weighted number of occurrences of each characteristic word is multiplied by proportion values of the each characteristic word in the categorizer acquired above, and calculated products of characteristic words of the web page to be categorized are accumulated to acquire scores of the whole web page in various categories. Still taking automobile as an example, Table 3 shows acquired scores of automobile in various categories.

**Table 3**

| | |
|---|---|
| Standard categories | Automobile |
| Catering and foods | 0.29689 |
| Animation websites | 0.30962 |
| Transportation and travel | 0.334627 |
| Educational culture | 0.381197 |
| Finance and economy | 0.396396 |
| Military and national defense | 0.282783 |
| **Automobile websites** | **8.933572** |

Step 611, a category having the highest score is used as a category of the web page.

The scores of the characteristic words in the web page, which correspond to various categories, are acquired through analysis and calculation based on the categorizer, and it may be learned through analysis that "automobile websites" has the highest score. Therefore, the web page may be categorized as an "automobile website".

It should be understood by those skilled in the art that the embodiments of the disclosure may be provided as methods, systems or computer program products. Therefore, the disclosure may apply forms of hardware embodiments, software embodiments or embodiments combining software and hardware. Moreover, the disclosure may apply a form of a computer program product implemented on one or more computer-available storage media (including but not limited to a magnetic disk memory, an optical memory and the like) containing computer usable program codes.

The disclosure is described with reference to flowcharts and/or block diagrams of methods, devices (systems) and computer program products according to the embodiments of the disclosure. It should be understood that each flow and/or block in the flowcharts and/or block diagrams and combination of flows and/or blocks in the flowcharts and/or block diagrams may be implemented by computer program instructions. These computer program instructions may be supplied to a general-purpose computer, a special-purpose computer, an embedded processor or a processor of other programmable data processing equipment to produce a machine, so that a device for realizing functions specified in one or more flows of the flowcharts and/or one or more blocks of the block diagrams is produced through instructions executed by the computer or the processor of other programmable data processing equipment.

These computer program instructions may also be stored in a computer-readable memory capable of guiding the computer or other programmable data processing equipment to work in a specific mode, so that a manufactured product containing an instruction device is produced through the instructions stored in the computer-readable memory, and the instruction device implements the functions specified in one or more flows of the flowcharts and/or one or more blocks of the block diagrams.

These computer program instructions may also be loaded to the computer or other programmable data processing equipment, so that a series of operation steps are executed in the computer or other programmable data processing equipment to produce processing implemented by the computer, and the steps for implementing the functions specified in one or more flows of the flowcharts and/or one or more blocks of the block diagrams are provided through the instructions executed in the computer or other programmable data processing equipment.

The forgoing content is provided for further describing the disclosure in details in combination with specific embodiments and it shall not be construed that specific implementation of the disclosure is limited to these descriptions. For those of ordinary skill in the art, several simple deductions or replacements may be further made without departing from the conception of the disclosure, and these deductions or replacements should be considered as belonging to the protection scope of the disclosure.

## Claims

1. A web page categorization standard acquisition method, comprising:
acquiring a sample web page of each of standard categories;
extracting content of a tag from each of the acquired sample web pages;
determining a standard characteristic word from the extracted content of the tag;
determining the number of occurrences of each standard characteristic word in each of the standard categories according to the number of occurrences of the each standard characteristic word in content of each tag; and
determining a proportion value of each standard characteristic word in each of the standard categories according to the number of occurrences of the each standard characteristic word in each of the standard categories, so as to acquire a standard list of portion values of standard characteristic words in the standard categories.

2. The web page categorization standard acquisition method according to claim 1, wherein the tag comprises at least one of a title tag, keywords tag, description tag and an important text tag.

3. The web page categorization standard acquisition method according to claim 1, wherein determining the standard characteristic word from the extracted content of the tag comprises:
performing word segmentation on the extracted content of the tag to acquire the standard characteristic word.

4. The web page categorization standard acquisition method according to any one of claims 1 to 3, wherein determining the proportion value of each standard characteristic word in each of the standard categories according to the number of occurrences of the each standard characteristic word in each of the standard categories so as to acquire the standard list of portion values of standard characteristic words in the standard categories comprises:
composing a vector space using the number of occurrences of each standard characteristic word in each of the standard categories; and
acquiring the proportion value of each standard characteristic word in each of the standard categories using a statistical algorithm.

5. The web page categorization standard acquisition method according to any one of claims 1 to 3, further comprising: after determining the proportion value of each standard characteristic word in each of the standard categories according to the number of occurrences of the each standard characteristic word in each of the standard categories,
determining whether there is a standard characteristic word having close proportion values in all standard categories, and when there is, deleting the standard characteristic word from the standard list of portion values.

6. A web page categorization method, comprising:
extracting content of tags of a web page to be categorized;
extracting characteristic words from the content of the tags according to standard characteristic words in the standard list of portion values acquired according to any one of claims 1 to 5;
determining, according to numbers of occurrences of each characteristic word in the content of the tags, the number of occurrences of the each characteristic word in the web page to be categorized; and
determining, according to numbers of occurrences of the extracted characteristic words in the web page to be categorized and the standard list of portion values, a standard category to which the web page to be categorized belongs.

7. The web page categorization method according to claim 6, wherein extracting the characteristic words from the content of the tags according to the standard characteristic words in the standard list of portion values comprises:
extracting words which are the same as any of the standard characteristic words from the content of the tags as the characteristic words; or extracting words which are the same as and similar to any of the standard characteristic words from the content of the tags as the characteristic words, the words similar to any of the standard characteristic words being represented by corresponding standard characteristic words when such words exist in the content of the tags.

8. The web page categorization method according to claim 6 or 7, wherein determining, according to the numbers of occurrences of each characteristic word in the content of the tags, the number of occurrences of the each characteristic word in the web page to be categorized comprises:
summing numbers of occurrences of a characteristic word in the content of the tags, so as to acquire the number of occurrences of the characteristic word in the web page to be categorized; or
setting respective weighted values for the content of the tags, multiplying numbers of occurrences of a characteristic word in the content of the tags by respective weighted values corresponding to the content of the tags and summing resulting products, so as to acquire the number of occurrences of the characteristic word in the web page to be categorized.

9. The web page categorization method according to claim 6 or 7, wherein determining, according to the numbers of occurrences of the extracted characteristic words in the web page to be categorized and the standard list of portion values, the standard category to which the web page to be categorized belongs comprises:
when the web page to be categorized has only one characteristic word, multiplying the number of occurrences of the characteristic word in the web page to be categorized by proportion values of the characteristic word in the standard categories, so as to acquire scores in the standard categories, and taking a standard category corresponding to the largest score as the standard category to which the web page to be categorized belongs; or
when the web page to be categorized has at least two characteristic words, multiplying the number of occurrences of each characteristic word in the web page to be categorized by proportion values of the each characteristic word in the standard categories so as to acquire scores of the characteristic words in the standard categories, and taking a standard category corresponding to the largest score among all acquired scores as the standard category to which the web page to be categorized belongs; or taking a standard category corresponding to the largest score among scores of each characteristic word as the standard category to which the web page to be categorized belongs.

10. A web page categorization standard acquisition device, comprising:
a web page acquiring module, configured to acquire a sample web page of each of standard categories;
a content acquiring module, configured to extract content of a tag from each of the acquired sample web pages;
a standard characteristic word acquiring module, configured to determine a standard characteristic word from the extracted content of the tag;
a first calculating module, configured to determine the number of occurrences of each standard characteristic word in each of the standard categories according to the number of occurrences of the each standard characteristic word in content of each tag; and
a first processing module, configured to determine a proportion value of each standard characteristic word in each of the standard categories according to the number of occurrences of the each standard characteristic word in each of the standard categories, so as to acquire a standard list of portion values of standard characteristic words in the standard categories.

11. The web page categorization standard acquisition device according to claim 10, further comprising a correcting module configured to, after the first processing module acquires the proportion value of each standard characteristic word in each of the standard categories according to the number of occurrences of the each standard characteristic word in each of the standard categories, determine whether there is a standard characteristic word having close proportion values in all standard categories, and when there is, delete the standard characteristic word from the standard list of portion values.

12. A web page categorization device, comprising:
a tag acquiring module, configured to extract content of tags of a web page to be categorized;
a characteristic word acquiring module, configured to extract characteristic words from the content of the tags according to standard characteristic words in the standard list of portion values acquired according to any one of claims 1 to 5;
a second calculating module configured to determine, according to numbers of occurrences of each characteristic word in the content of the tags, the number of occurrences of the each characteristic word in the web page to be categorized; and
a second processing module configured to determine, according to numbers of occurrences of the extracted characteristic words in the web page to be categorized and the standard list of portion values, a standard category to which the web page to be categorized belongs.

13. A computer storage medium having stored therein instructions that, when executed, cause at least one processor to perform the web page categorization standard acquisition method according to any one of claims 1 to 5.

14. A computer storage medium having stored therein instructions that, when executed, cause at least one processor to perform the web page categorization method according to any one of claims 6 to 9.
